# EUROPEAN PATENT SPECIFICATION

(11) **EP 2 459 816 B1**
(45) Date of publication and mention of the grant of the patent: **11.12.2019**
(21) Application number: 10776267.6
(22) Date of filing: 29.07.2010
(51) Int. Cl.: E04F 13/08, F16B 13/04

(54) **A DOWEL WITH ALTERNATIVE EMBEDDING OF THRUST PLATE IN THERMAL INSULATION LAYER AND A METHOD OF ITS MOUNTING**
DÜBEL MIT ALTERNATIVEN SETZMÖGLICHKEITEN DER DRUCKPLATTE IN WÄRMEISOLIERENDEN SCHICHTEN UND VERFAHREN FÜR SEINE MONTAGE
GOUJON AVEC ENROBAGE ALTERNATIF DE PLAQUE DE BUTÉE DANS UNE COUCHE D'ISOLANT THERMIQUE ET SON PROCÉDÉ DE MONTAGE

(30) Priority: 31.07.2009 CZ 20090510
(43) Date of publication of application: 06.06.2012
(73) Proprietor: Illinois Tool Works, Inc., Glenview, Illinois 60025 (US)
(72) Inventor: VORÁ EK, Lubo, 39468 Zirovnice (CZ)
(74) Representative: Trinks, Ole
(86) International application number: PCT/CZ2010/000088
(87) International publication number: WO 2011/012096

(56) References cited:
- EP-A1- 1 248 000
- EP-A2- 0 288 023
- EP-A2- 1 318 250
- EP-A2- 1 818 477
- DE-U1- 29 517 042

## Description

### Technical Field

The present invention concerns a dowel with an alternative embedding of the thrust plate into thermal insulation layer, applicable for fastening of thermal insulation panels for heat insulation of outer walls of buildings, and a method of its mounting as defined in the preamble of claim 1. Such a dowel is known from EP 1 248 000 A1.

### Background Art

Coating of building elevation walls with heat insulation panels is one of preferred methods of thermal insulation of buildings. For their fastening plastic fasteners are used, that can be divided in dowels with an expansion section and with an expanding element, and dowels with an anchoring element of special form. A preferential attention has lately been paid to the possibility of a perfect and economically efficient finish of heat insulated building elevation in the final stage of work. It is therefore required (sometimes under an obligatory standard) to embed the dowel thrust plate and the head of the expanding element at least flush with the insulation panel surface, or preferentially to sink the dowel thrust plate deeper in the insulation with its subsequent covering with an insulating plug.

Embedding of a thrust plate with the head of the expanding element is solved in a known manner by shifting the thrust plate along the dowel shank resulting in compression of the insulating material, or by a deformation reducing the dowel shank length by means of a deformable element. Also known is the method of cutting-through of the insulation material for embedding of the thrust plate by means of special fixtures.

Known from the Patent Application EP 1457688A1 is a plastic dowel consisting of a hollow shank, a thrust plate, an expansion section and an expanding element. The dowel shaft comprises a deformable element enabling embedding of the thrust plate into the insulation material. The deformable element is formed by a thin-wall section on which at least one spiral projection (like a worm) is formed. The deformable element does not practically change its outer diameter during its deformation.

Known from the utility model DE29517042 U1 is a single-piece deformable element of a very thin wall thickness, integral with the reverse side of the thrust plate. The inner diameter of the deformable element exceeds the inner diameter of the dowel shank middle section. In the walls of the deformable element are formed grooves alternatively on the outer and on the inner surface. After application of a proper thrust on the thrust plate against the expansion section the deformable element is deformed to form a sole wave of a bellows compensator.

The Patent Application WO2008/006465 A1 reveals the versions of dowel shank shortening either by shifting the thrust plate along the shank, or by using a deformable element. The deformable element is shaped in a whole as a single-piece foil-type joint having after its deformation the form of a single-piece bellows directly connected with the reverse side of the thrust plate.

The documents mentioned above all describe the dowels embedding the thrust plate merely in level flush with the insulation surface level.

Known from the Patent Specification DE 10159632B4 is a dowel enabling deep embedding of the thrust plate in the insulation material and its covering with an insulation plug, while the plate is shifted along the dowel shank. The plate has on its reverse side on its periphery a cutting-through element. For introduction of the expanding element into the expansion area of the dowel and at the same time for pressing the thrust plate into the insulating material a jig with a stop is used, providing for the desired depth of embedding. As an alternative a fixture for embedding of the plate in the insulation is shown, having on its circumference a cutting-through element as well as a stop for presetting of the embedding depth.

From the Patent Specification EP 1318250 A1 is known a mounting jig and a method of mounting a dowel having a deformation section. In the first step a hole into the insulation and wall is drilled by means of a mounting jig and at the same time an annular deep cut with a required depth and diameter for housing of a thrust plate is performed. In the second step the dowel with the expanding element is inserted, then using the assembly jig, the expanding element is driven in and the thrust plate pressed home along with compression of the insulation material. The space over the plate is covered with an insulation plug.

Another mounting jig is known from EP 1 818 477 A2.

### Disclosure of invention

The latest state-of-the-art is improved by a dowel with alternative embedding of the thrust plate in the insulation material according to the present invention, consisting of a dowel shank with a thrust plate on its one end, with an expansion section on its other end and a compressible section on the shank, of an expanding element and of an element for performing a cut for embedding the plate as further defined in claim 1.

The substance of the invention is in that on the cylindrical part of the dowel shank a compressible section is located in the form of longitudinal segments shaped by at least two longitudinal slots in the shank wall, while at both ends of said longitudinal slots and amidst of longitudinal segments the shank wall thickness is reduced. The compressible section is at least two-and-half times longer then the largest outer diameter of the shank. The element performing the cut-through for embedding of the plate represents an independent cutting part. Weakening of shank walls at the slot ends and in the middle of longitudinal segments is achieved by means of cross grooves on the inner or outer shank wall. The compressible section is separate from the expansion section, wherein the diameter of the expansion section is smaller than the diameter of the compressible section.

The compressible section on the shank can be situated close to the expansion section or close to the reverse side of the thrust plate.

In a preferred implementation the compressible section situated below the thrust plate is expanded during screwing or hammering of the expanding element by means of an expanding collar situated in the upper part of the expanding element.

The plastic cutting-through element has a form of a cylindrical shell having a bottom with a centering part with outer diameter adapted for insertion into the drilled hole in the insulation and a notch for a free fitting of the thrust plate on the bottom, while above the bottom inside the shell is a stepped seat for a central fitting of the thrust plate, and on the reverse side of the bottom on the circumference are made sharp projections with cutting edges.

In a preferred implementation the cylindrical section of the shank is constituted by three sections with stepped inner diameters, while the first cylindrical section of the shank with the largest diameter flushes with the conical part below the thrust plate, its outer diameter ahead of the compressible section is reduced by a shoulder and the lesser diameter so obtained is after the compressible section still reduced by a conical passage to the diameter of the expansion section, thus simplifying the design of the injection tool of the transfer moulding machines.

The mounting process according to the present invention is defined in claim 8. In case of a surface embedding of the thrust plate in the insulation panel is in that the dowel shank is inserted in the pre-drilled hole in the insulation and in the basic wall so that the thrust plate rests on the insulation surface level and the expansion section is situated inside the wall. Then the expanding element is screwed in or hammered in so as to press the plate surface flush with the insulation level.

In the alternative case of deep fitting of the thrust plate in the insulation the dowel shank carrying the cutting-through element is inserted in the hole pre-drilled in the insulation panel and in the wall so that the bottom of the cutting-through element is situated on the insulation surface level. Then the expanding element is screwed-in so that the surface of the thrust plate is depressed by at least the plug thickness below the insulation surface level, whereupon the cavity over the thrust plate is filled by a plug made of the insulation material corresponding to the basic insulation make.

To achieve an accurate deep fitting of the thrust plate, it is suitable to use a mounting jig consisting of a stem for fastening in an electric screwdriver, fitted with a seat for a spacer or for a support ring and with a tang on its end.

In the alternative implementation of surface mount the mounting jig is used in a setup where it is the spacer which comes in contact with the seat area of the stem.

In the alternative implementation of deep embedded mount the mounting jig is used in a setup where it is the support plate which comes in contact with the seat area of the stem.

### Brief description of drawings

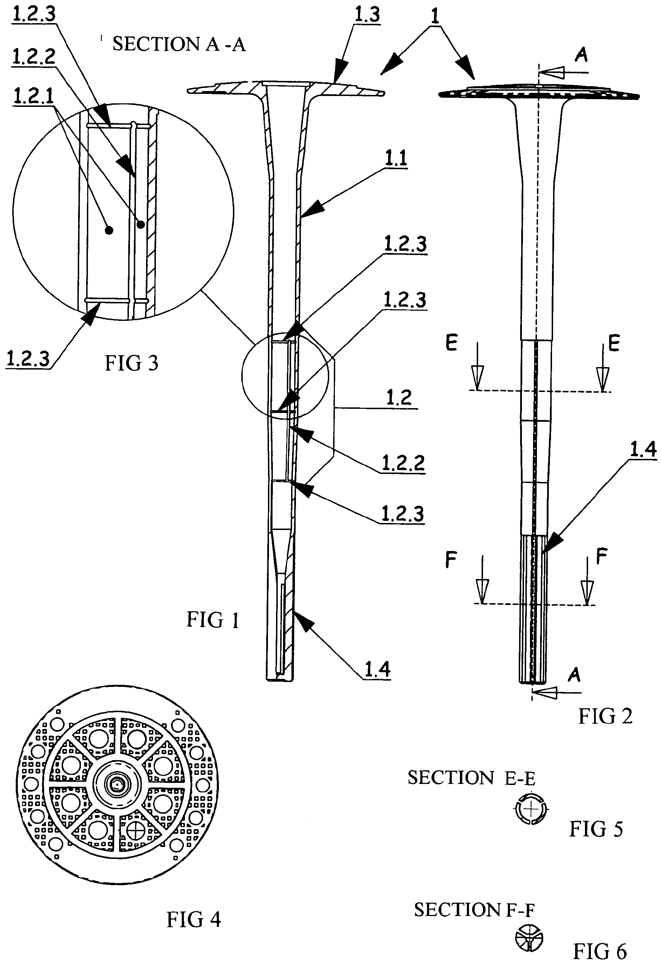

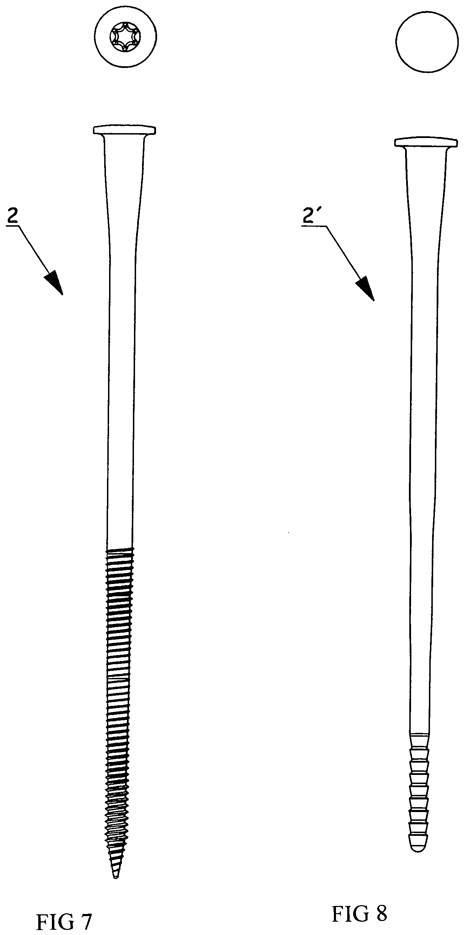

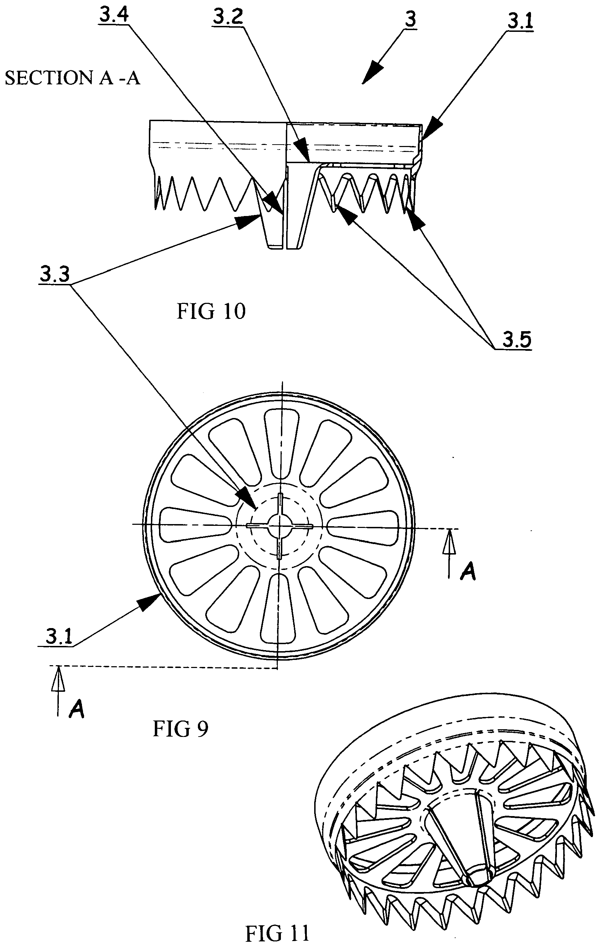

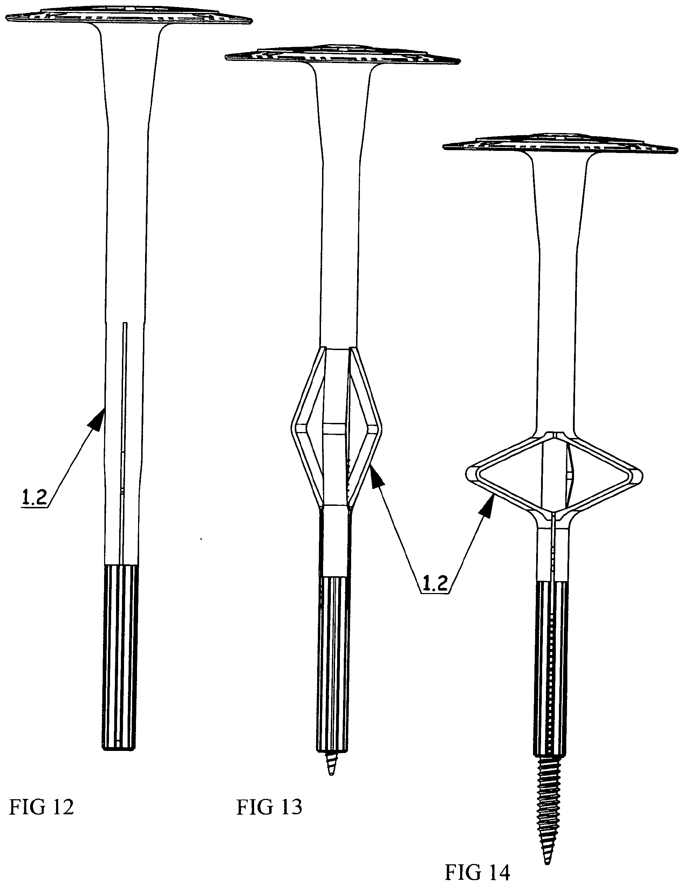

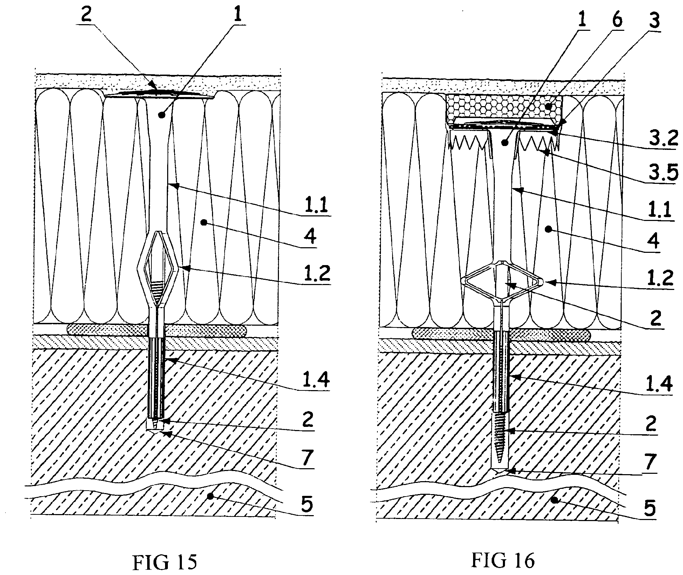

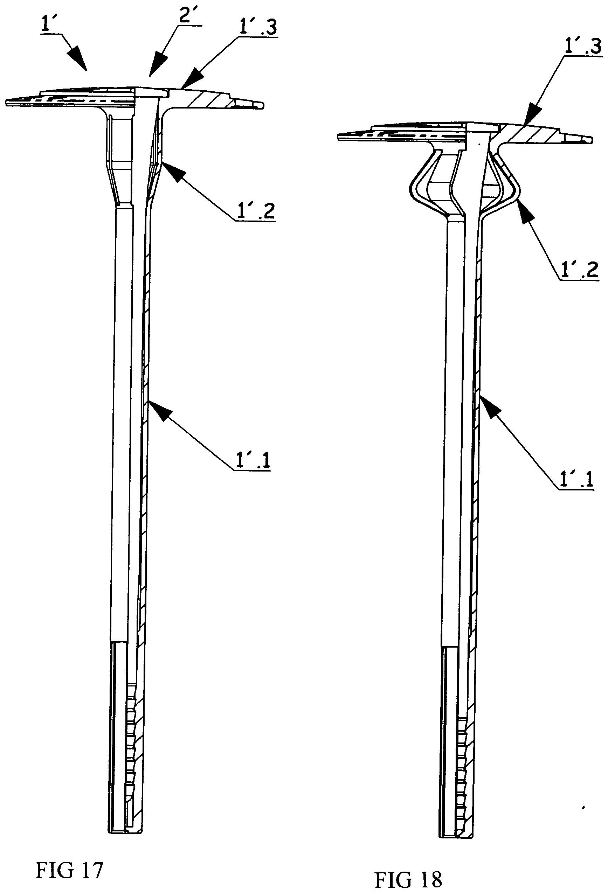

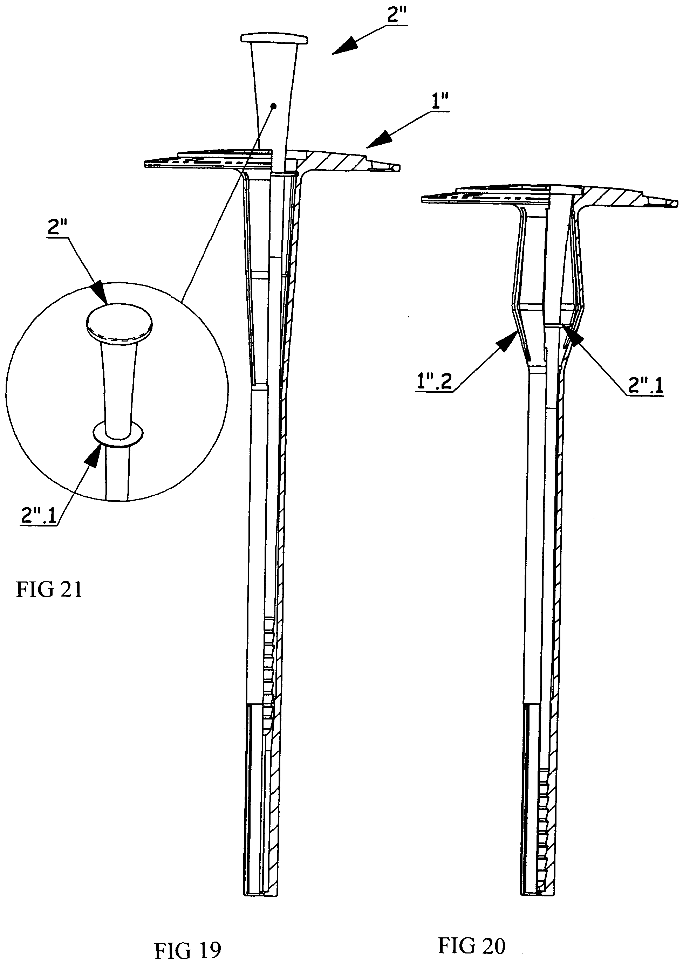

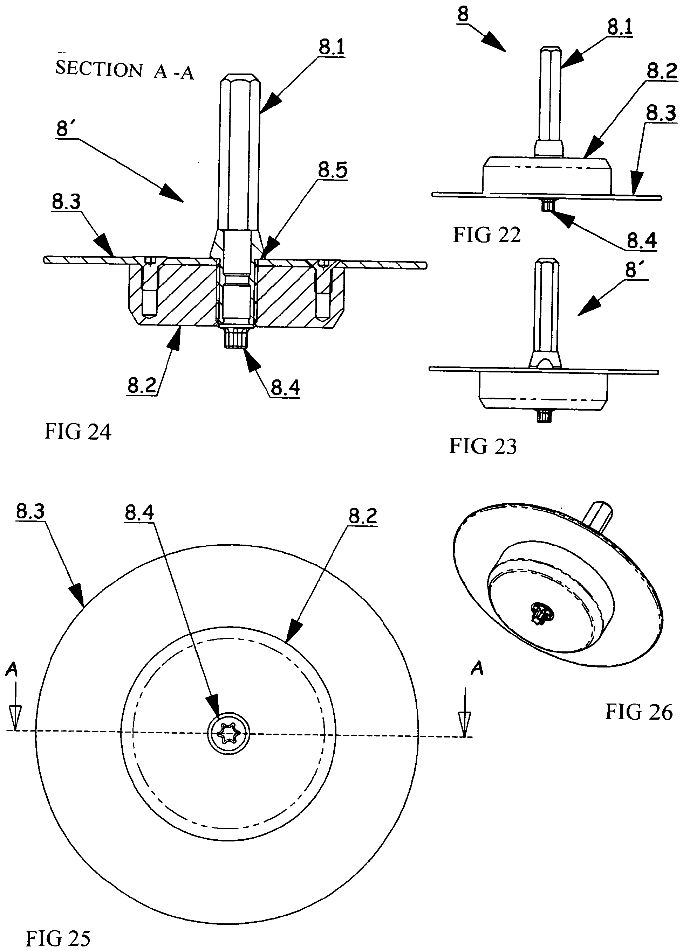

The invention is in particular explained on the drawings in which Fig. 1 shows a longitudinal section of a dowel, Fig. 2 is an overall view of a dowel from Fig. 1, Fig. 3 presents a scaled-up longitudinal section of the compressible section of the dowel, Fig. 5 is a cross section of the compressible section, Fig. 6 is a cross section of the expansion section, Fig. 7 shows an expanding screw-type element, Fig. 8 an expanding hammering element, Fig. 9 is a view from upside of the cutting-through element, Fig. 10 is a partial section from Fig. 9, Fig. 11 is an axonometric view of the cutting-through element, Fig. 12 is a view on non-deformed dowel with screwed-in expanding element, Fig. 13 shows a deformation of 5 mm, Fig. 14 shows a maximum deformation by 15 mm, Fig. 15 is a view of surface mounting with a minimum embedding in the isolation, Fig. 16 is a view of a dowel with deep embedding of the thrust plate in a final stage after finished mounting. Figs. 17-21 show a comparative example which does not form part of the present invention. Fig. 17 is a view of a dowel with the compressible section below the thrust plate in non-deformed condition, Fig. 18 is a deformed compressible section of the dowel from Fig. 17, Fig. 19 presents a view of a dowel with an expanding element with an expansion collar, Fig. 20 a view of a dowel with deformation of the compressible section from Fig. 19, Fig. 21 brings a detailed view of an expanding element with an expansion collar. Fig. 22 is a mounting jig for surface mounting, Fig. 23 shows a mounting jig for deep embedding, Fig. 24 is a mounting jig in longitudinal section for deep embedding, Fig. 25 is a view from the side of the tang of Fig. 24 and Fig. 26 presents an axonometric view of the mounting jig from Fig. 23.

### Examples of implementation of the invention

### Example 1

Described in this example is a dowel with its compressible section above the expansion section and the way of installing deep embedding of the thrust plate in the insulation panel. The dowel consists of a thrust plate 1.3, a shank 1.1, on which a compressible section 1.2 is formed, consisting of three longitudinal segments 1.2.1 shaped by three longitudinal slots 1.2.2 in the wall of the shank 1.1. Close to both ends of slots 1.2.2 on the inner wall cross grooves L2.3 are formed. Equal grooves 1.2.3 are also made in the middle of all three longitudinal segments 1.2.1. The cross grooves 1.2.3 weaken the walls and substantially reduce the force necessary for the deformation of longitudinal segments 1.2.1 when reducing the length of the shank 1.1. for deep mounting of the thrust plate 1.3 in the isolation surface 4. The dowel 1 is clamped in the hole 7 of the wall 5 by friction resulting from expansion of the expansion section L4 owing to screwed-in expanding element 2. The expanding section j.4 has a commonly known shape. The cylindrical part of the shank 1.1 has starting from its connection to the conical part from bottom of the thrust plate 1.3 the largest diameter, which is stepped down ahead of the compressible section 1.2 and continues with its reduced diameter till over the compressible section L2 after which follows a conical reduction down to the diameter of the expansion section 1.4.

The cutting-through element I fitted in the course of mounting on the thrust plate 1.3 has a form of a cylindrical shell 3A carrying a bottom 3.2 with a centering part 3.3 of an outer diameter for fitting into the drilled hole 7 in the insulating material 4, with a notch 3A to fit the lower part of the thrust plate 1.3 of dowel 1 and thence a free fitting of thrust plate 1.3 on the bottom 3.2. In the cutting-through element 3 on the lower side of bottom 3.2 on the periphery are formed sharp projections 3.5 carrying cutting edges.

All parts of dowel L expanding element 2 and cutting-through element 3 are made of plastic.

Mounting of dowel 1 for deep embedding of the thrust plate 1.1 proceeds so that the shank 1.1 with its cutting-through element 3 is inserted into the pre-drilled hole 7 in the insulation material 4 and in the wall 5 so deep that the bottom 3.2 of the cutting-through element 3 rests on the surface of insulation 4, thereafter the expanding element 2 is driven so far that the surface of the thrust plate 1.3 is depressed below the surface of isolation 4 at least by the thickness of the plug 6 and then the cut out cavity above the thrust plate L3 is filled by the plug 6 made of the same material as that of the isolation 4.

### Example 2

This example describes a dowel with a compressible section situated close to the bottom side of the thrust plate and the mounting process for surface embedding of the thrust plate in the insulation panel. The dowel consists of a shank 1 '.1 comprising a compressible section 1 .2 composed of six longitudinal segments created by six longitudinal slots in the wall of the shank U. Close to both slot ends are formed cross grooves on the inner wall.

In the case of surface embedding no cutting-through element 3 is used, and mounting is performed by pushing of the dowel shank 1.1 into the pre-drilled hole 7 in insulation 4 and wall 5 to bring the thrust plate 13 onto the surface of insulation 4 and the expanding section into the wall 5., whereupon the expanding element 2 is driven or hammered so deep that the surface of the thrust plate 1.3 is depressed flush with the surface of insulation 4.

### Example 3

This example describes a comparative example which does not form part of the present invention having a dowel with a compressible section situated close to the bottom side of the thrust plate, and the mounting process of surface embedding of the thrust plate in the insulation panel. The compressible section 1".2 is composed of six longitudinal segments created by six longitudinal slots in the wall of the shank like in Example 2. For expansion of the compressible section segments is used an expanding collar 2".1 of the expanding element 2". Resulting deformation proceeds along the edge of the expanding collar 2".1, which after hammering of the expanding element 2" bends the longitudinal segment outwards and reduces so the dowel length.

### Example 4

For an accurate deep embedding of the thrust plate in the insulation panel a mounting jig should preferably be used.

For surface embedding of the thrust plate. 1.3 in the insulation is used a mounting jig 8 consisting of a stem 8.1 for clamping in an electric screwdriver, having a rest surface 8.5 and ending by a tang BA On the stem U. is fastened a spacer 8.2 with a support plate 8.3 so that the support plate 8.3 is directed towards the tang 8.4.

Mounting proceeds so that the shank 1.1 of the dowel is pushed into the pre-drilled hole 7 in insulation 4 and wall 5 so that the thrust plate 1.3 rests on the insulation surface 4 and the expansion section 1.4 is in the wall 5. Then the tang 8.4 of the mounting jig 8 is inserted into the corresponding seat in the head of the screw-driving expanding element 2 and the expanding element 2 is driven into the dowel so far as the support plate 8.3 rests on the insulation surface.

### Example 5

For a deep embedding of the thrust plate 1.3 in the insulation panel a mounting jig 8' is used, where a spacer 8.2 with a support plate 8.3 is fastened with the spacer 8.2 directed towards the tang 8.4.

Mounting of the dowel 1 with deep embedding of the thrust plate 1.3 proceeds so that the shank 1.1 with the cutting-through element 3 is pushed into the pre-drilled hole 7 in insulation 4 and wall 5 so deep that the bottom 3.2 of the cutting-through element 3 rests on the surface of insulation 4. Then the tang 8.4 of the mounting jig 8 is inserted into the corresponding seat in the head of the screw driving expanding element 2 and the expanding element 2 is driven into the dowel so far as the support plate 8.3 rests on the insulation surface. The remaining cavity resulting from the deep cut above the thrust plate 1.3 is then filled with a plug 6 made of identical material of insulation 4.

### Industrial applicability

The dowel according to the present invention is suitable for fastening heat insulating panels for thermal insulation of outer elevation walls of buildings. Its applicability concerns both surface embedding and deep embedding of the thrust plate in the insulating material.

### List of Reference Numbers

- 1: dowel
- 1.1: dowel shank
- 1.2: compressible section
- 1.2.1: longitudinal segment
- 1.2.2: longitudinal slot
- 1.2.3: cross groove
- 1.3: thrust plate
- 1.4: expansion section
- 2: expanding element screwing type
- 2': expanding element hammering type
- 2": expanding element hammering type with expansion collar
- 2".1...: expanding collar
- 3: cutting-through element
- 3.1: cylindrical shell
- 3.2: bottom
- 3.3: centring part
- 3.4: notch
- 3.5: sharp projections
- 4: insulation / insulating panel
- 5: wall
- 6: insulation plug
- 7: hole
- 8: mounting jig for surface embedding
- 8': mounting jig for deep embedding
- 8.1: stem
- 8.2: spacer
- 8.3: support plate
- 8.4: tang
- 8.5: rest surface of the stem

## Claims

1. A dowel (1) with alternative embedding of the thrust plate (1.3) in the insulating panel, comprising a dowel shank (1.1) with a thrust plate (1.3) on its one end, with an expansion section (1.4) on the opposite end, an expanding element (2), and a compressible section (1.2) on the shank (1.1) in the form of longitudinal segments (1.2.1) created by at least two longitudinal slots (1.2.2) in the wall of said shank (1.1), while the length of the compressible section (1.2) is at least two-and-half times longer than the outer diameter of said shank (1.1), wherein the compressible section (1.2) is situated on a cylindrical part of the shank (1.1) of the dowel, and that close to both ends of said longitudinal slots (1.2.2) and about in the middle of said longitudinal segments (1.2.1) the walls of said shank (1.1) are weakened, and
wherein a weakening of the walls of the shank (1.1) close to the ends of slots (1.2.2) and in the middle of longitudinal segments (1.2.1) is each created by a cross groove (1.2.3) on the inner or on the outer wall of the shank (1.1),
**characterized in that**
the compressible section (1.2) is separate from the expansion section (1.4), wherein the diameter of the expansion section (1.4) is smaller than the diameter of the compressible section (1.2),
the dowel (1) further comprising an element for creating of a cut-through for deep embedding of said thrust plate (1.3) being created by an individual cutting-through element (3).

2. A dowel according to Claim 1, **characterized in that** the compressible section (1.2) is situated on the shank (1.1) closely above the expansion section (1.4).

3. A dowel according to Claim 1, **characterized in that** the compressible section (1.2) is situated on the shank (1.1) closely to the bottom side of the thrust plate (1.3).

4. A dowel according to Claim 3, **characterized in that** the compressible section (1".2) is expanded during hammering of the expanding element (2") by means of an expanding collar (2".1) situated in the upper part of the expanding element (2").

5. A dowel according to Claim 1, **characterized in that** the plastic cutting-through element (3) has a form of a cylindrical shell (3.1) having a bottom (3.2) with a centering part (3.3) with its outer diameter fitting for insertion into a drilled-out hole (7) in insulation (4) and with a notch (3.4) for loose fitting of the thrust plate (1.3) on the bottom (3.2), while above said bottom (3.2) inside the shell (3.1) a step for central deposition of the thrust plate (1.3) is formed and sharp projections (3.5) with cutting edges are situated on the lower side of the bottom (3.2) on the periphery.

6. A dowel according to Claim 1, **characterized in that** the cylindrical part of the shank (1.1) is created by three sections with stepped outer diameters, while the first cylindrical section of said shank (1.1) with the largest diameter passes over flush onto the conical part below the thrust plate (1.3), and ahead of the compressible section (1.2) its diameter is stepped down and the resulting smaller diameter is after the compressible section (1.2) still reduced by a conical passage to the diameter of the expansion section (1.4).

7. A mounting jig (8, 8') for implementation of surface embedding or deep embedding of the thrust plate (1.3) of a dowel (1), comprising a stem (8.1) for clamping in an electric screwdriver, having a rest surface (8.5), a spacer (8.2) attached to a support plate (8.3), and a tang (8.4),
**characterized in that**
the support plate (8.3) and the spacer (8.2) are mountable in two different ways such that the jig (8) is used for the alternative of surface embedding in a setup in which the part resting on the rest surface (8.5) of the stem (8.1) is the spacer (8.2), whereas for the alternative of deep embedding said jig (8') is used in a setup in which the part resting on the rest surface (8.5) of the stem (8.1) is the support plate (8.3).

8. Method of mounting of the dowel according to Claim 1 by means of a mounting jig (8, 8') of claim 7 by
the alternative of surface embedding of the thrust plate (1.3) into isolation, wherein the shank (1.1) of the dowel (1) is inserted into a pre-drilled hole (7) in isolation (4) and wall (5) so deep that the thrust plate (1.3) rests on the surface of insulation (4) and the expanding section (1.4) is situated in the wall (5), then an expanding element (2, 2', 2") is driven or hammered so that the surface of the thrust plate (1.3) is brought in flush with the surface level of the insulation (4);
or by the further alternative of deep embedding of the thrust plate (1.3) in the isolation panel (4), wherein the shank (1.1) of the dowel (1) carrying a cutting-through element (3) is pushed into a pre- drilled hole (7) in insulation (4) and wall (5) so that the bottom (3.2) of the cutting-through element (3) rests on the surface of the insulating panel (4), then an expanding element (2, 2', 2") is driven or hammered in so that the surface of the thrust plate (1.3) is embedded at least by the thickness of the plug (6) below the surface level of the insulating panel (4), whereupon the cavity above the thrust plate (1.3) is filled by a plug (6) made of insulation material identical with that of the insulation panel,
wherein for the alternative of surface embedding the part resting on the rest surface (8.5) of the stem (8.1) of the mounting jig is the spacer (8.2), whereas for the alternative of deep embedding the part resting on the rest surface (8.5) of the stem (8.1) is the support plate (8.3).

9. Method of mounting according to Claim 8, **characterized in that** prior to screwing in the expanding element (2, 2") the mounting jig (8, 8') is used for an accurate deep embedding of the thrust plate into the insulating panel.

## Patentansprüche

1. Dübel (1) mit alternativen Versenkungsmöglichkeiten der Druckplatte (1.3) in der Dämmplatte, einen Dübelschaft (1.1) mit einer Druckplatte (1.3) an einem Ende, mit einem Ausdehnungsabschnitt (1.4) am entgegengesetzten Ende, ein Ausdehnungselement (2) und einen zusammendrückbaren Abschnitt (1.2) auf dem Schaft (1.1) in Form von durch mindestens zwei längliche Schlitze (1.2.2) in der Wand des Schafts (1.1) erzeugten länglichen Segmenten (1.2.1) umfassend, wobei die Länge des zusammendrückbaren Abschnitts (1.2) mindestens zweieinhalbmal länger als der Außendurchmesser des Schafts (1.1) ist,
wobei sich der zusammendrückbare Abschnitt (1.2) auf einem zylindrischen Teil des Schafts (1.1) des Dübels befindet und dass die Wände des Schafts (1.1) in der Nähe beider Enden der länglichen Schlitze (1.2.2) und etwa in der Mitte der länglichen Segmente (1.2.1) geschwächt sind, und
wobei eine Schwächung der Wände des Schafts (1.1) in der Nähe der Enden der Schlitze (1.2.2) und in der Mitte der länglichen Segmente (1.2.1) jeweils durch eine Quernut (1.2.3) auf der inneren oder äußeren Wand des Schafts (1.1) erzeugt wird,
**dadurch gekennzeichnet, dass**
der zusammendrückbare Abschnitt (1.2) vom Ausdehnungsabschnitt (1.4) getrennt ist, wobei der Durchmesser des Ausdehnungsabschnitts (1.4) kleiner als der Durchmesser des zusammendrückbaren Abschnitts (1.2) ist,
der Dübel (1) ferner ein Element zum Erzeugen eines Einschnitts zum tiefen Versenken der Druckplatte (1.3) umfasst, der durch ein einzelnes Einschneideelement (3) erzeugt wird.

2. Dübel nach Anspruch 1, **dadurch gekennzeichnet, dass** sich der zusammendrückbare Abschnitt (1.2) auf dem Schaft (1.1) direkt über dem Ausdehnungsabschnitt (1.4) befindet.

3. Dübel nach Anspruch 1, **dadurch gekennzeichnet, dass** sich der zusammendrückbare Abschnitt (1.2) auf dem Schaft (1.1) in der Nähe der Unterseite der Druckplatte (1.3) befindet.

4. Dübel nach Anspruch 3, **dadurch gekennzeichnet, dass** der zusammendrückbare Abschnitt (1''.2) während des Einschlagens des Ausdehnungselements (2'') mittels einer Ausdehnungsmanschette (2''.1), die sich im oberen Teil des Ausdehnungselements (2'') befindet, ausgedehnt wird.

5. Dübel nach Anspruch 1, **dadurch gekennzeichnet, dass** das Kunststoff-Einschneideelement (3) die Form einer zylindrischen Hülse (3.1) aufweist, die einen Boden (3.2) mit einem Zentrierteil (3.3), dessen Außendurchmesser für das Einsetzen in ein gebohrtes Loch (7) in einer Dämmung (4) passend ist, und mit einer Kerbe (3.4) für das lockere Aufsetzen der Druckplatte (1.3) am Boden (3.2) aufweist, wobei über dem Boden (3.2) innerhalb der Hülse (3.1) eine Stufe zur mittigen Ablagerung der Druckplatte (1.3) ausgebildet ist und wobei sich scharfe Vorsprünge (3.5) mit Schneidkanten auf der Unterseite des Bodens (3.2) am Rand befinden.

6. Dübel nach Anspruch 1, **dadurch gekennzeichnet, dass** der zylindrische Teil des Schafts (1.1) durch drei Abschnitte mit abgestuften Außendurchmessern erzeugt wird, wobei der erste Zylinderabschnitt des Schafts (1.1) mit dem größten Durchmesser bündig auf den konischen Teil unter der Druckplatte (1.3) gelangt und sein Durchmesser vor dem zusammendrückbaren Abschnitt (1.2) verringert wird und der resultierende, kleinere Durchmesser nach dem zusammendrückbaren Abschnitt (1.2) durch einen konischen Durchgang zum Durchmesser des Ausdehnungsabschnitts (1.4) weiter reduziert wird.

7. Montagevorrichtung (8, 8') zum Umsetzen einer Oberflächenversenkung oder tiefen Versenkung der Druckplatte (1.3) eines Dübels (1), einen Stamm (8.1) zum Einspannen eines elektrischen Schraubendrehers, der eine Auflagefläche (8.5), einen an einer Trägerplatte (8.3) befestigten Abstandhalter (8.2) und einen Dorn (8.4) aufweist, umfassend,
**dadurch gekennzeichnet, dass**
die Trägerplatte (8.3) und der Abstandhalter (8.2) auf zwei verschiedene Arten montiert werden können, sodass die Vorrichtung (8) für die alternative Oberflächenversenkung in einer Konfiguration verwendet wird, in der das auf der Auflagefläche (8.5) des Stamms (8.1) aufliegende Teil der Abstandhalter (8.2) ist, wobei bei der alternativen tiefen Versenkung die Vorrichtung (8') in einer Konfiguration verwendet wird, in der das auf der Auflagefläche (8.5) des Stamms (8.1) aufliegende Teil die Trägerplatte (8.3) ist.

8. Verfahren zum Montieren des Dübels nach Anspruch 1 mittels einer Montagevorrichtung (8, 8') nach Anspruch 7 durch die alternative Oberflächenversenkung der Druckplatte (1.3) in eine Dämmung, wobei der Schaft (1.1) des Dübels (1) so tief in ein vorgebohrtes Loch (7) in einer Dämmung (4) und Wand (5) eingesetzt wird, dass die Druckplatte (1.3) auf der Oberfläche der Dämmung (4) aufliegt und sich der Ausdehnungsabschnitt (1.4) in der Wand (5) befindet, und anschließend ein Ausdehnungselement (2, 2', 2'') eingedreht oder eingeschlagen wird, sodass die Oberfläche der Druckplatte (1.3) mit der Oberfläche der Dämmung (4) bündig wird;
oder durch die weitere alternative tiefe Versenkung der Druckplatte (1.3) in die Dämmplatte (4), wobei der Schaft (1.1) des Dübels (1), der ein Einschneideelement (3) trägt, in ein vorgebohrtes Loch (7) in der Dämmung (4) und der Wand (5) gedrückt wird, sodass der Boden (3.2) des Einschneideelements (3) auf der Oberfläche der Dämmplatte (4) aufliegt, und anschließend ein Ausdehnungselement (2, 2', 2'') eingedreht oder eingeschlagen wird, sodass die Oberfläche der Druckplatte (1.3) zumindest um die Stärke des Stopfens (6) unter die Oberfläche der Dämmplatte (4) versenkt wird, woraufhin der Hohlraum über der Druckplatte (1.3) mit einem Stopfen (6) aus mit der Dämmplatte identischem Dämmmaterial gefüllt wird,
wobei bei der alternativen Oberflächenversenkung das auf der Auflagefläche (8.5) des Stamms (8.1) der Montagevorrichtung aufliegende Teil der Abstandhalter (8.2) ist, wobei bei der alternativen tiefen Versenkung das auf der Auflagefläche (8.5) des Stamms (8.1) aufliegende Teil die Trägerplatte (8.3) ist.

9. Verfahren zur Montage nach Anspruch 8, **dadurch gekennzeichnet, dass** vor dem Einschrauben des Ausdehnungselements (2, 2'') die Montagevorrichtung (8, 8'') für eine genaue, tiefe Versenkung der Druckplatte in die Dämmplatte verwendet wird.

## Revendications

1. Goujon (1) avec enrobage alternatif de la plaque de poussée (1.3) dans le panneau d'isolation, comprenant une tige de goujon (1.1) avec une plaque de poussée (1.3) à l'une de ses extrémités, une section de dilatation (1.4) à l'autre extrémité, un élément de dilatation (2) et une section compressible (1.2) sur la tige (1.1) sous la forme de segments longitudinaux (1.2.1) créés par au moins deux fentes longitudinales (1.2.2) dans la paroi de ladite tige (1.1), tandis que la longueur de la section compressible (1.2) est supérieure d'au moins deux fois et demi au diamètre externe de ladite tige (1.1),
dans lequel la section compressible (1.2) est située sur une partie cylindrique de la tige (1.1) du goujon, et que, assez proche des deux extrémités desdites fentes longitudinales (1.2.2) et environ au milieu desdits segments longitudinaux (1.2.1), les parois de ladite tige (1.1) sont affaiblies, et
dans lequel un affaiblissement des parois de la tige (1.1) proche des extrémités des fentes (1.2.2) et au milieu des segments longitudinaux (1.2.1) est créé individuellement par une rainure croisée (1.2.3) sur la paroi interne ou externe de la tige (1.1),
**caractérisé en ce que**
la section compressible (1.2) est séparée de la section de dilatation (1.4), dans lequel le diamètre de la section de dilatation (1.4) est inférieur au diamètre de la section compressible (1.2),
le goujon (1) comprenant en outre un élément destiné à créer une découpe pour un enrobage profond de ladite plaque de poussée (1.3) créée par un élément de découpe individuel (3).

2. Goujon selon la revendication 1, **caractérisé en ce que** la section compressible (1.2) est située sur la tige (1.1) près de la section de dilatation (1.4).

3. Goujon selon la revendication 1, **caractérisé en ce que** la section compressible (1.2) est située sur la tige (1.1) près du côté inférieur de la plaque de poussée (1.3) .

4. Goujon selon la revendication 3, **caractérisé en ce que** la section compressible (1".2) est dilatée pendant le martelage de l'élément de dilatation (2") au moyen d'un collier de dilatation (2".1) situé dans la partie supérieure de l'élément de dilatation (2").

5. Goujon selon la revendication 1, **caractérisé en ce que** l'élément de découpe en plastique (3) présente la forme d'une coque cylindrique (3.1) comportant un fond (3.2) avec une partie centrale (3.3) dont le diamètre externe est adapté à l'insertion dans un trou percé (7) dans l'isolation (4) et avec une encoche (3.4) pour ajuster librement la plaque de poussée (1.3) sur le fond (3.2), tandis qu'au-dessus dudit fond (3.2), à l'intérieur de la coque (3.1), une marche pour le dépôt central de la plaque de poussée (1.3) est formée et des projections acérées (3.5) avec des bords coupants sont situées sur le côté inférieur du fond (3.2) sur la périphérique.

6. Goujon selon la revendication 1, **caractérisé en ce que** la partie cylindrique de la tige (1.1) est créée par trois sections présentant des diamètres externes échelonnés, tandis que la première section cylindrique de ladite tige (1.1) présentant le plus grand diamètre passe par-dessus le niveau de la partie conique sous la plaque de poussée (1.3), et devant la section compressible (1.2), son diamètre est diminué et le diamètre plus petit résultant est, derrière la section compressible (1.2), encore réduit par un passage conique au diamètre de la section de dilatation (1.4).

7. Gabarit de montage (8, 8') pour la mise en œuvre d'un enrobage en surface ou d'un enrobage en profondeur de la plaque de poussée (1.3) d'un goujon (1), comprenant un pied (8.1) destiné à être serré dans un tournevis électrique, comportant une surface de repos (8.5), une entretoise (8.2) fixée à une plaque de support (8.3) et un tenon (8.4),
**caractérisé en ce que**
la plaque de support (8.3) et l'entretoise (8.2) peuvent être montées de deux manières différentes de sorte que le gabarit (8) soit utilisé pour l'alternative d'enrobage en surface dans une installation dans laquelle la partie reposant sur la surface de repos (8.5) du pied (8.1) est l'entretoise (8.2), tandis que pour l'alternative d'enrobage en profondeur, ledit gabarit (8') est utilisé dans une installation dans laquelle la partie reposant sur la surface de repos (8.5) du pied (8.1) est la plaque de support (8.3).

8. Procédé de montage du goujon selon la revendication 1 au moyen d'un gabarit de montage (8, 8') selon la revendication 7, comprenant
l'alternative de l'enrobage en surface de la plaque de poussée (1.3) dans l'isolation, dans lequel la tige (1.1) du goujon (1) est insérée dans un trou pré-percé (7) dans l'isolation (4) et dans la paroi (5) assez profondément pour que la plaque de poussée (1.3) repose sur la surface de l'isolation (4) et que la section de dilatation (1.4) soit située dans la paroi (5), ensuite un élément de dilatation (2, 2', 2") est entraîné ou martelé de sorte que la surface de la plaque de poussée (1.3) soit amenée au niveau de la surface de l'isolation (4) ;
ou l'autre alternative de l'enrobage en profondeur de la plaque de poussée (1.3) dans le panneau d'isolation (4), dans lequel la tige (1.1) du goujon (1) portant un élément de découpe (3) est poussée dans un trou pré-percé (7) dans l'isolation (4) et la paroi (5) de sorte que le fond (3.2) de l'élément de découpe (3) repose sur la surface du panneau d'isolation (4), ensuite un élément de dilatation (2, 2', 2") est entraîné ou martelé de sorte que la surface de la plaque de poussée (1.3) soit enrobée au moins de l'épaisseur du bouchon (6) sous le niveau de surface du panneau d'isolation (4), moyennant quoi la cavité au-dessus de la plaque de poussée (1.3) est remplie par un bouchon (6) constitué d'un matériau d'isolation identique à celui du panneau d'isolation,
dans lequel pour l'alternative d'enrobage en surface, la partie reposant sur la surface de repos (8.5) du pied (8.1) du gabarit de montage est l'entretoise (8.2), tandis que pour l'alternative d'enrobage en profondeur, la partie reposant sur la surface de repos (8.5) du pied (8.1) est la plaque de support (8.3).

9. Procédé de montage selon la revendication 8, **caractérisé en ce qu'**avant de se visser dans l'élément de dilatation (2, 2"), le gabarit de montage (8, 8') est utilisé pour un enrobage en profondeur précis de la plaque de poussée dans le panneau d'isolation.
